# EUROPEAN PATENT SPECIFICATION

(11) **EP 1 214 811 B1**
(45) Date of publication and mention of the grant of the patent: **18.08.2004**
(21) Application number: 00961371.2
(22) Date of filing: 25.08.2000
(51) Int. Cl.: H04L 9/08

(54) **KEY MANAGEMENT METHODS FOR SECURE COMMUNICATION SYSTEMS**
VERFAHREN ZUR SCHLÜSSELVERWALTUNG FÜR SICHERE KOMMUNIKATIONSSYSTEME
PROCEDES DE GESTION CLES POUR DES SYSTEMES DE COMMUNICATION SECURISES

(30) Priority: 31.08.1999 US 387546; 06.06.2000 US 587845
(43) Date of publication of application: 19.06.2002
(73) Proprietor: MOTOROLA, INC., Schaumburg, IL 60196 (US)
(72) Inventor: ANDERSON, Walter, F., C., Algonquin, IL 60102 (US); KNAPCZYK, Stanley, Justice, IL 60458 (US); MURRILL, Larry, Schaumburg, IL 60193 (US); GONSALVES, Mark, Mazon, IL 60444 (US); FORMAN, Patrick, F., Palatine, IL 60067 (US)
(74) Representative: McCormack, Derek James
(86) International application number: PCT/US2000/023397
(87) International publication number: WO 2001/017160

(56) References cited:
- US-A- 4 613 901
- US-A- 5 093 860
- US-A- 5 164 986
- US-A- 5 404 403
- US-A- 5 471 532
- ELLIS B: "Key management engine techniques for sensitive or classified equipment initialization" MILITARY COMMUNICATIONS CONFERENCE, 1993. MILCOM '93. CONFERENCE RECORD. COMMUNICATIONS ON THE MOVE., IEEE BOSTON, MA, USA 11-14 OCT. 1993, NEW YORK, NY, USA,IEEE, US, 11 October 1993 (1993-10-11), pages 354-358, XP010142776 ISBN: 0-7803-0953-7

## Description

### FIELD OF THE INVENTION

This invention relates generally to secure communication systems, and more particularly to key management methods for secure communications systems.

### BACKGROUND OF THE INVENTION

Secure communication systems are well known. Police and public safety personnel, for example, often require secure voice and/or data communications between mobile transmitters and receivers, such as in-car mobile or hand-held portable radios (mobiles) as well as fixed transmitters and receivers, such as a central dispatch station. The communication paths between the mobiles and the fixed end are typically wireless links, such as radio frequency (RF) channels. The communication paths between fixed transmitters and receivers are typically wireline links, such as land-based phone lines. Secure communication is made possible by designated transmitters and receivers (hereinafter "encryption devices") sharing an encryption key that uniquely specifies an encryption algorithm for the communication. Only encryption devices having identical keys are capable of intelligibly reproducing the communication. Each individual encryption device may have more than one key. For example, it is frequently desirable for supervisory radios to have several different keys to communicate with different groups of users each having a different key. The keys are usually changed periodically, typically weekly or monthly to reduce the likelihood that the keys might be obtained by unauthorized parties.

The process of loading encryption keys into the encryption devices, called rekeying, can be accomplished in a variety of ways. Manual rekeying is the act of physically making contact between a key delivery device (e.g., Key Variable Loader, or KVL) and a target encryption device in order to deliver one or more encryption keys to the device. In most cases, the key delivery device (e.g., KVL) is a priori configured by a security officer and then placed in the hands of a field operator to carry out the rekeying process. The field operator typically plugs a cable from the KVL to the target encryption device, then presses the appropriate buttons on the KVL to download the keys into the memory of the target device.

It will be appreciated that there are a number of security challenges associated with a manual rekeying scheme. These challenges include knowing which ones of the encryption devices are to be rekeyed, knowing which keys are to be delivered to which encryption devices, and keeping track of the success, failure or completeness of each individual rekeying operation. These challenges are especially evident when differing sets of multiple keys are to be delivered to multiple radios.

Current systems for manual rekeying place a heavy burden upon the operator. The operator must generally maintain a list of target encryption devices, the list including a designation of which keys are to be delivered to which device. The operator is entrusted to reach every target device on the list, load the correct keys into each target device and record the results. Current schemes generally confirm the results of a rekey with an audible tone or text message at the encryption device and/or key delivery device. Some key delivery devices also create a local log of rekeying activity. However, the problem is that these mechanisms at best provide a record of rekeying activity actually accomplished by the operator-- they do not provide a record of rekeying activity for the target units the operator was *supposed* to rekey. There is no mechanism that would prevent the operator from accidentally rekeying a particular encryption device that should not have been rekeyed or that would prevent the operator from loading the wrong keys into a particular encryption device.

Centralized key management systems, such as Over-The-Air Rekeying (OTAR) systems, accomplish rekeying by transmitting the encrypted keys from a centralized Key Management Facility (KMF). The keys may be transmitted either individually or simultaneously to multiple encryption devices over a typical encrypted communication channel. Generally, a centralized rekeying system can accomplish rekeying in less time and with greater security than with manual rekeying. However, centralized key management systems are known to require a number of configuration steps upon initial set-up or upon fault recovery of the system.

First, an initial encryption key must be established between the KMF and each of the various encryption units to enable secure, remote and wireless delivery of subsequent encryption keys. This initial encryption key is usually established manually, for example, by loading the key into the encryption units with a manual key delivery device (e.g., KVL). Manual rekeying upon initial set-up of a centralized key management system presents generally the same security challenges as an ongoing manual rekeying scheme.

Second, a number of parameters including source and destination IDs (identifications) or addresses must be identified to establish the communications link between the KMF and the various encryption units for subsequent rekeying messages. At the KMF, a database records the IDs of each encryption unit and identifies which units need/have what keys. The source/destination IDs are then manually programmed into each of the various encryption units. In practice, therefore, several parameters for what can be several thousand subscriber units must be identically entered in different places, typically at different times and by different people. Clearly, this step is an expensive, error-prone and time-consuming burden.

Accordingly, there is a need for a key management system, either in an ongoing manual rekeying scheme or upon initial set-up or fault recovery of a centralized key management system, that reduces the burdens placed upon the key delivery device operator in performing rekeying activity. Preferably, the system will prevent the operator from accidentally rekeying a particular encryption device that should not have been rekeyed, will prevent the operator from loading the wrong keys into a particular encryption device and will provide for automatically recording the success or failure of rekeying activity. There is further a need for the system to support both encrypted ("black transfer to target") and unencrypted ("red transfer to target") modes of delivering rekeying messages to the target encryption devices.

Under normal circumstances, with the exception of the first key delivered to a target, it is desirable to transfer rekeying messages in an encrypted black transfer to target ("Black") mode to enhance security. In Black mode, the messages are encrypted during delivery and the target devices will usually have the appropriate encryption key(s) to process the messages. However, there are some circumstances where the target device may not have the proper key(s), or where the KMF records may get out of sync with the target devices causing a key mismatch, resulting in a failure to deliver the key management messages. In such case, it would be desirable to detect the failures as they happen and to flag the respective devices so that the KMF knows which device(s) need updated keys. Then, the proper keys may be delivered to the devices in a red transfer to target mode.

The present invention is directed to satisfying or at least partially satisfying the aforementioned needs.

US-A-5,164,986 describes primarily a central point Key Management Controller ("KMC") that performs over-the-channel intelligent rekeying of communication units. To the extent that this reference teaches a device being used for rekeying, it specifically teaches that the device is used to reach communication units that are out of the RF range of the KMC, wherein the KMC merely transmits "keys" to the device for manual rekeying of the communication units. Consequently, the device is not necessarily assured of delivering the right keys to the right targets.

### BRIEF DESCRIPTION OF THE DRAWINGS

The foregoing and other advantages of the invention will become apparent upon reading the following detailed description and upon reference to the drawings in which:
FIG. 1 is a diagram illustrating a key delivery device connected to an encryption device according to one embodiment of the present invention;
FIG. 2 is a block diagram of the key delivery device of FIG. 1;
FIG. 3 is a flowchart of a rekeying method using a key delivery device according to one embodiment of the present invention;
FIG. 4 is a diagram illustrating a key management facility connected to a key delivery device according to one embodiment of the present invention;
FIG. 5 is a flowchart identifying steps of a rekeying method performed by a key management facility according to one embodiment of the invention; and
FIG. 6 is a flowchart identifying steps for initial configuration of a centralized key management system according to one embodiment of the invention.

### DESCRIPTION OF PREFERRED EMBODIMENTS

The following describes a key management system usable in an ongoing manual rekeying scheme or upon initial set-up or fault recovery of a centralized key management system that reduces the burdens placed upon the key delivery device operator in performing rekeying activity. The system prevents the operator from accidentally rekeying a particular encryption device that should not have been rekeyed, prevents the operator from loading the wrong keys into a particular encryption device and provides for automatically recording the success or failure of rekeying activity. The system will support both encrypted ("black transfer to target") and unencrypted ("red transfer to target") modes of delivering rekeying messages to the target encryption devices. The system provides for setting up a centralized key management system without manually programming source and destination ID's into the various encryption units.

In one embodiment of the present invention, there is provided a key management method for a communication system including a key delivery device and a number of encryption devices. A record identifying target encryption devices is stored in the key delivery device, wherein the target encryption devices define ones of the encryption devices that are to receive one or more key management messages. Then, the key delivery device is operably connected to one or more candidate encryption devices. Upon connecting to the one or more candidate encryption devices, the key delivery device determines which ones of the candidate encryption devices are target encryption devices and delivers one or more key management messages to those devices.

In another embodiment of the present invention, there is provided a key management method for a communication system including a key management facility and a number of encryption devices. The key management facility targets one or more of the encryption devices ("target encryption devices") to receive key management messages and constructs one or more key management messages for the target encryption devices. Then, the key management facility communicates a record to a key delivery device identifying which ones of the key management messages are to be delivered to which ones of the target encryption devices. The key management messages identified in the record are routed, from the key management facility through the key delivery device, to the ones of the target encryption devices identified in the record. In one embodiment, the key management messages are encrypted at the key management facility, and the key management facility instructs the key delivery device to deliver the encrypted key management message to the selected encryption device, i.e., in black transfer to target mode. Alternatively, one or more key management messages are encrypted at the key management facility, and the key management facility instructs the key delivery to decrypt the messages and deliver the decrypted key management message to the selected encryption device, i.e., in red transfer to target mode.

In yet another embodiment of the present invention, there is provided a method of reporting key management messages from target encryption devices, through a key delivery device to a key management facility. A key delivery devices attempts delivery of one or more key management messages to one or more target encryption devices. The target encryption device(s) determine respective outcomes, e.g., success or failure, of the attempted delivery of key management messages and communicate messages to the key delivery device indicative of those outcomes. The key delivery device communicates a report including at least a portion of the respective messages to a centralized key management facility.

In still another embodiment of the present invention, there is provided a method for initial configuration of a communication system including a key management facility, a key delivery device and a number of encryption devices. The key management facility targets one or more of the encryption devices ("target encryption devices") to receive initial key management messages and constructs one or more key management messages for the target encryption devices. Then, the key management facility sets addressing parameters for the initial key management messages, the addressing parameters designating one or more of the target encryption devices to receive the initial key management messages. The initial key management messages and addressing parameters are communicated from the key management facility to the key delivery device, which then delivers respective ones of the initial key management messages to one or more of the target encryption devices according to the addressing parameters. Optionally, the key delivery device appends the initial key management messages with system-wide parameters, defining appended messages that are delivered to the target encryption devices. In one embodiment, the appended messages are delivered in red transfer to target mode to the target devices.

In still yet another embodiment of the present invention, there is provided a method of managing keyload security levels in a secure communication system. The method comprises determining, by a key management facility, that a target encryption device is unable to process a key management message sent in black transfer to target mode. For example, the determination by the KMF that a target encryption device will be unable to process a key management message sent in black transfer to target mode, may result from a priori knowledge that the target device does not have the proper keys or may result from a failed attempt to deliver an encrypted key management message to the target encryption device in a black transfer to target mode. Then, the key management facility constructs a record identifying the target encryption device and indicia of a red store and forward mode to be used for updating the target encryption device. The record is communicated from the key management facility to a key delivery device, and the key management message is delivered, in red store and forward mode, from the key delivery device to the target encryption device.

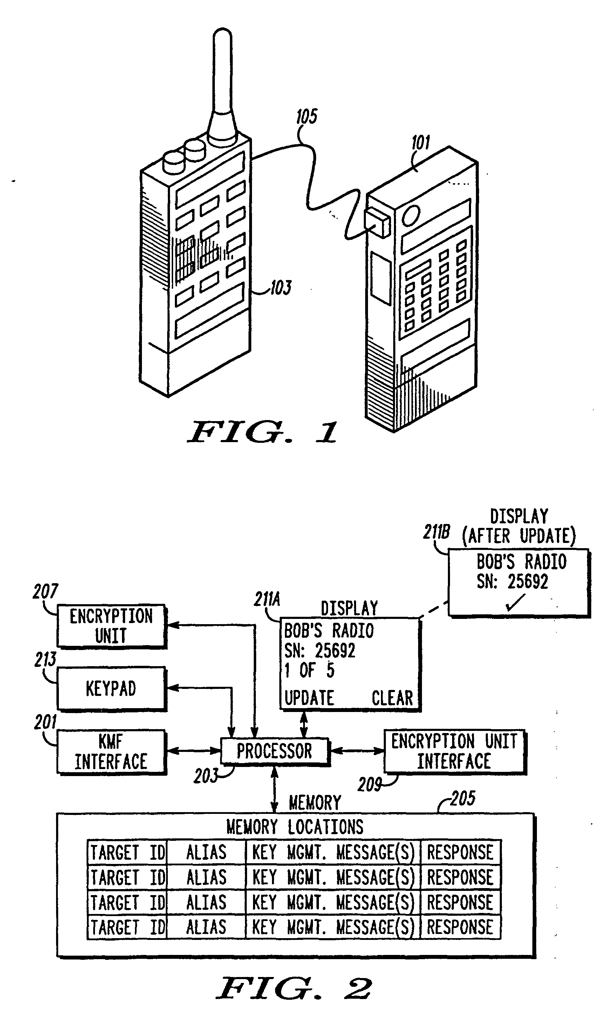

Turning now to the drawings and referring initially to FIG. 1, there is shown a key delivery device 101 connected to an encryption device 103. In one embodiment, the key delivery device 101 is a key variable loader (KVL) such as a KVL 3000, available from Motorola, Inc. and the encryption device 103 is a mobile radio, such as an ASTRO Spectra mobile radio, available from Motorola, Inc. As shown in FIG. 1, a cable 105 connects the key delivery device 101 to the encryption device 103 so that key management messages may be communicated from the key delivery device 101 to the encryption device 103. It will be appreciated, however, that wireless communications or other suitable means might be used to communicate key management messages from the key delivery device 101 to the encryption device 103. The key management messages may comprise rekeying messages supplying a selected one or more encryption keys to the encryption device 103.

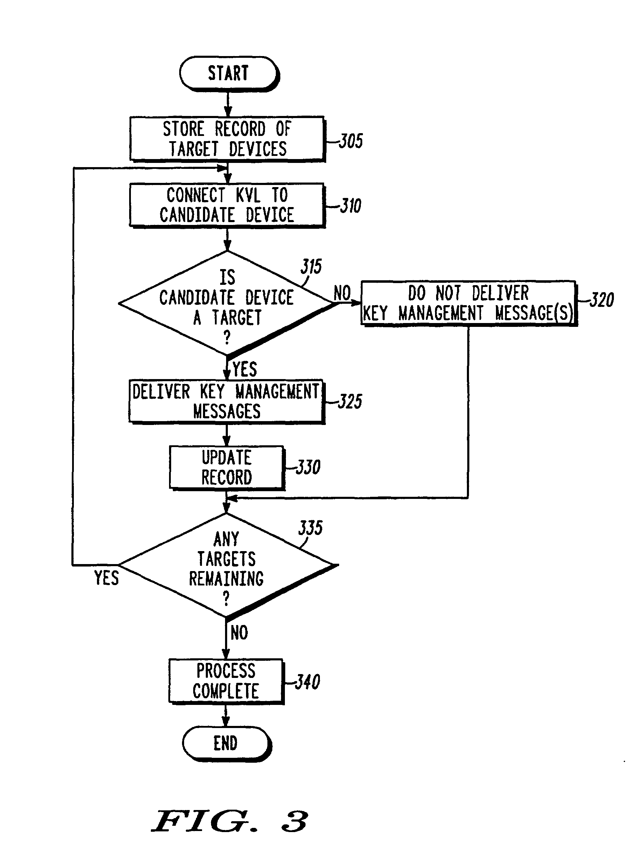

FIG. 2 is a block diagram of the key delivery device 101 according to one embodiment of the invention. For convenience, the key delivery device 101 will hereinafter be referred to as the KVL. A KMF interface 201 (e.g., telephone line) allows for the KVL to be operably connected to a centralized key management facility, or KMF (not shown). An encryption unit interface 209 (e.g., cable) allows for the KVL to be operably connected to various encryption units. In one embodiment, the KMF communicates key management messages to the KVL that are to be delivered to specific encryption units. For example, encrypted rekeying messages destined for specific encryption units may be created at the KMF and securely downloaded to the KVL via the KMF interface 201. For convenience, those encryption units that are targeted by the KMF to receive messages will hereinafter be referred to as "target units."

In a preferred embodiment, the KMF communicates a record to the KVL identifying the various target units and identifying which messages are to be delivered to the target units. In other words, the record directly associates each of the target units to the key management messages that are to be delivered to those target units. The key management messages may include rekeying messages, in which case the record assures that the right keys will be delivered to the right units. The record may also include an assignment between the target units and one or more key delivery devices.

In one embodiment, in a store and forward operation, the KMF communicates an instruction to the KVL to deliver rekeying messages in either a black store and forward mode or a red store and forward mode. "Black store and forward" refers to the transfer of rekeying messages stored in the KVL to the target unit in a black (encrypted) transfer to target mode. "Red store and forward" refers to the transfer of rekeying messages stored in the KVL to the target unit in a red (unencrypted) transfer to target mode. In an OTAR operation, rekeying messages are communicated to the target device in black transfer to target mode. In one embodiment, the KMF maintains a record of devices that are to be updated via OTAR and/or store and forward techniques, the record advantageously identifying the security level of the update, e.g., red transfer to target mode or black transfer to target mode. For example, the record may be implemented by storing the target devices in a memory (not shown) and "flagging" those target devices that are to be updated in red transfer to target mode with some indicia of the required security level. Alternatively or additionally, the messages associated with the target devices may be flagged. For example, the KMF may employ a "Needs Service" flag to indicate those devices that need service and thereby require an update in red transfer to target mode.

The communication of an "instruction," as used herein, shall be understood to encompass both direct and indirect instructions. For example, in one embodiment, the communication of an "instruction" comprises the communication of key management messages and/or a record which contain information (such as "Needs Service" flag(s)) that enables the KVL itself to determine whether it should deliver rekeying messages in either a "black transfer to target" mode or "red transfer to target" mode. In such case, the information communicated by the KMF to the KVL comprises an indirect instruction because, in effect, the KVL derives from the information a directive to deliver rekeying messages in either a "black transfer to target" mode or "red transfer to target" mode. Alternatively, the instruction may comprise a directive issued directly by the KMF (e.g., executable software code) to the KVL. Similarly, the "execution" of an instruction comprises the performing of an action (e.g., delivering rekeying messages in "black transfer to target" or "red transfer to target" mode) according to a direct or indirect instruction as defined herein. In either case, the instruction may be contained within, or may be independent from, the key management message(s) sent from the KMF.

In store and forward mode, the KVL processor 203 operates to store at least a portion of the record and/or instructions received from the KMF at various memory locations in memory 205. For example, as shown in FIG. 2, the record stored in the various memory locations of memory 205 includes the target ID, alias, and key management message(s) associated with the various target units, each of which may be provided to the KVL through the KMF interface 201. The target ID comprises in one embodiment a numeric ID (e.g., serial number) of the various target units. The alias comprises in one embodiment a more "user friendly" identification of the target units, such as "BOB'S RADIO." The record may further include flags (such as "Needs Service" flags) or indicia of those target units that are designated to receive key management messages in red-transfer to target mode. The key management messages comprise in one embodiment rekeying messages to be delivered to the various target units.

In one embodiment, the key management messages (e.g., rekeying messages), whether they are to be delivered in red transfer to target mode or black transfer to target mode, are communicated to the KVL in encrypted ("black") format and also stored in the memory in encrypted ("black") format. For those messages that are to be delivered in red transfer to target mode, the encrypted ("black") key management messages delivered to the KVL are decrypted by the encryption unit 207, yielding decrypted ("red") messages to be transferred to the target. The decrypted ("red") messages are encrypted by the encryption unit 207, yielding encrypted ("black") messages that are stored in the memory 205. Then, when the KVL is to deliver the messages to a target unit, the processor 203 causes the encrypted ("black") messages stored in the memory 205 to be decrypted by the encryption unit 207, yielding decrypted ("red") messages for delivery to the target unit. In one embodiment, for those messages that are to be delivered in black transfer to target mode, the encrypted ("black") key management messages delivered to the KVL are encrypted a second time by the encryption unit 20, yielding twice encrypted ("black") messages that are stored in the memory 205. Prior to delivery of the messages, the twice encrypted ("black") messages are decrypted by the encryption unit 207, yielding the original encrypted ("black") messages for delivery to the target encryption units.

The memory 205 also includes memory locations for storing response messages (designated "RESPONSE" in FIG. 2) from the various target units, provided through the target interface 209. The response messages may comprise, for example, an indication of successful or unsuccesful attempts to transfer key management messages to the various target units. In one embodiment, the KVL collects the responses and reports them to the KMF, via the KMF interface.

Upon first connecting the KVL to an encryption unit, the KVL performs a handshaking process with the unit to determine its identity and to determine if the unit is a target unit. For convenience, the term "candidate encryption device" will be used to refer to a device whose identity is not yet ascertained, hence that is not yet known to be a target unit. In one embodiment, this is accomplished by the processor 203 first ascertaining the numeric unit ID of the candidate encryption device. The processor 203 compares the identity of the candidate encryption device to the identities of the target encryption devices stored in memory 205. If the identity of the candidate encryption device matches any of the identities of the target units (e.g., unit ID's) stored in memory, the processor 203 determines that the candidate encryption device is a target unit. Conversely, if the identity of the candidate encryption device does not match any of the unit ID's stored in memory, the processor 203 determines that the candidate encryption device is not a target unit.

If the candidate encryption device is determined to be a target unit, the KVL processor 203 retrieves from memory one or more key management messages destined for that target (e.g., twice-encrypted key management messages, in black transfer to target mode or once-encrypted key management messages, in red transfer to target mode), decrypts the messages (e.g., yielding "black" messages in black transfer to target mode or "red" messages in red transfer to target mode) and then causes the messages to be communicated to the target unit. If the candidate encryption device is determined not to be a target unit, the KVL processor 203 does not communicate any key management messages (e.g., rekeying messages) to that unit. The decision of whether to load keys/messages into a particular device, the decision of which keys/messages to load into a particular device and the decision of which security level (Black or Red) to use for the transfer is taken out of the hands of the operator. The processor 203 causes the right keys to be loaded into the right encryption devices, at the right security level automatically upon connection of the KVL to the respective candidate units. Accordingly, it is virtually impossible for a KVL operator in the field to accidentally rekey a device that should not have been rekeyed, to deliver the wrong keys to a particular device or to deliver rekeying messages at the wrong security level.

A display 211 is provided for displaying messages to the KVL operator. It will be appreciated that the display 211 may take various forms to display various different items of information. Display 211 A represents one example of a display that might appear upon first connecting the KVL to one of the target units. The display 211A shows the alias ("BOB's RADIO") of the target unit and the ID (SN: 25692) of the target unit. A message ("1 OF 5") informs the operator that BOB's RADIO is one of five target units that are to receive key management messages. This latter message helps to ensure that the KVL operator will reach each of the target units. Also shown are instruction fields ("UPDATE" and "CLEAR") identifying instructions that may be performed by the operator. In one embodiment, the instructions are exercisable by the operator pressing a suitable key (e.g., an "UPDATE" key) on a conventional keypad 213. Alternatively, the instruction fields themselves may comprise touch-responsive "keys," for example, that are exercisable by the operator touching the desired portion (e.g., "UPDATE") of the display. In one embodiment, exercise of the "UPDATE" instruction by the operator causes the processor 203 to automatically deliver key management messages to the target unit based on the record stored in the memory 205, as heretofore described.

Display 211 B represents one example of a display that might appear after attempting an update of a target unit. The display 211B, like the display 211 A, shows the alias ("BOB's RADIO") of the target unit and the ID (SN: 25692) of the target unit. Upon attempting the update, the KVL processor 203 receives an acknowledgement from the target unit indicating, for example, whether the attempted update was successful or unsuccessful. In one embodiment, the acknowledgement is a message ("RESPONSE") that is stored in the memory 205 of the KVL. Then, in one embodiment, the processor 203 causes the display 211 to display a message indicative of success or failure of the attempted update. In the example display 211B, a checkmark symbol ("√") informs the operator that the update of BOB's RADIO was successfully completed. Of course, a variety of messages or symbols other than a checkmark might be used to inform the operator of the outcome of the attempted update. Optionally, a message indicative of an unsuccessful attempt might also be displayed if the KVL is connected to a candidate unit that is determined not to be a target unit, or if the target unit does not have the appropriate keys to decode the message.

In one embodiment, after all targets have been contacted, the KVL processor 203 uploads detailed acknowledgements collected and stored in the memory 205 to the KMF, via the KMF interface 201. The detailed acknowledgements may include an identification of which keys were delivered to which units, an identification of which keys were unsuccessfully delivered, error conditions, and the like. Hence, the detailed acknowledgements provide an explicit and reliable means for a centralized key management facility to confirm rekeying results. If any of the detailed acknowledgements indicate a failed attempt to deliver key management messages, the KMF may adjust the security level of the transfer from black to red, and re-attempt the transfer, as appropriate.

FIG. 3 is a flowchart illustrating a rekeying method according to one embodiment of the invention. At step 305, the key delivery device (e.g., KVL) stores a record of target encryption devices that are to receive one or more key management messages, such as rekeying messages. The record may include identification codes and/or aliases of the target encryption devices and flags or other indicia of the security level that is to be used for transferring the key management messages, as heretofore described. In one embodiment, the record is supplied to the KVL from a Key Management Facility (KMF) remote from the KVL. At step 310, the KVL is operably connected (e.g., by cable or wireless connection) to a candidate encryption device. At step 315, the KVL determines if the candidate encryption device is a target encryption device. In one embodiment, this is accomplished by the KVL first determining an identity (e.g., numeric unit ID) of the candidate device, then comparing the unit ID of the candidate device to the unit IDs of the target devices stored in the record. The KVL determines the candidate encryption device to be a target encryption device if the unit ID of the candidate encryption device matches a unit ID of a target encryption device identified in the record. Conversely, the KVL determines the candidate encryption device not to be a target encryption device if the unit ID of the candidate encryption device does not match a unit ID of a target encryption device identified in the record.

If at step 315 the candidate device is determined by the KVL to be a target device, the KVL delivers key management messages to the unit (step 320). The KVL may deliver encrypted ("black") or decrypted ("red") rekeying messages to the candidate device, now determined to be a target device, based on flags (e.g., "Needs Service" flags) or other indicia of the appropriate security level, as heretofore described. The target device may receive one or more messages, and each message may include one or more rekeying messages. Also, the message(s) delivered to the target device may differ from the message(s) delivered, or yet to be delivered, to other target devices. At step 330, the KVL updates the record, for example, to reflect that the target device has been successfully or unsuccessfully rekeyed.

Then, the process proceeds to step 335 where the KVL determines if there are any target devices remaining that are to receive key management messages. If there are no target devices remaining, the process is complete (step 340). Otherwise, if there are still target devices remaining, the process returns to step 310 where the KVL is connected to a next candidate device, and so forth. Optionally, if there are still target devices remaining, a message is displayed to the operator indicating how many or which ones of the target devices are remaining.

If at step 315 the candidate device is determined by the KVL not to be a target device, the KVL does not deliver any key management messages to the unit (step 320). For example, if a delivery is attempted by an operator to a candidate device determined not to be a target device, the KVL will block such attempt at step 320. Then, the process continues to step 335 where the KVL determines if there any target devices remaining, as heretofore described.

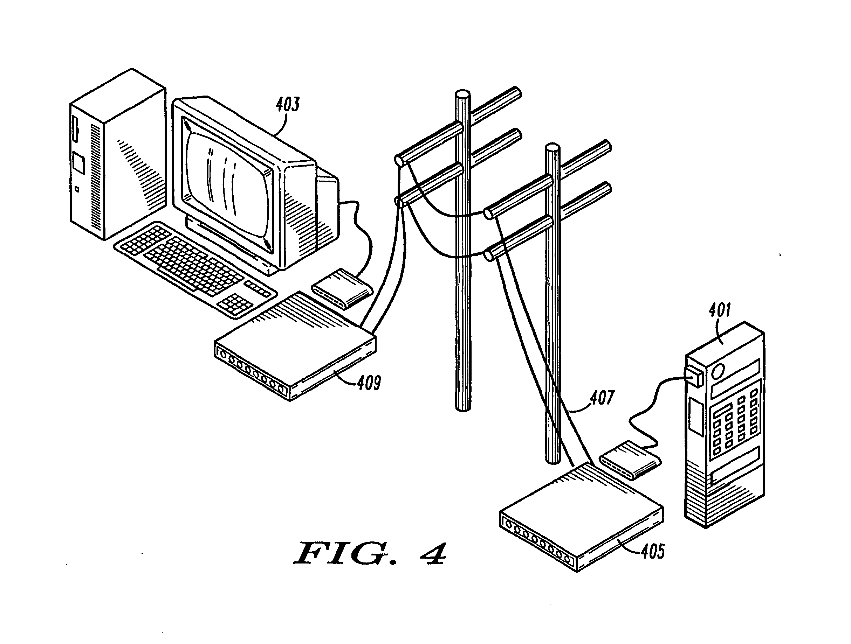

FIG. 4 illustrates a key delivery device 401 (e.g., KVL) connected to a key management facility (KMF) 403. In one embodiment, the KVL operator initiates a transfer of key management messages by entering the proper commands into the KVL 401, which in turn accesses the KMF through modem 405, standard telephone lines 407 and the modem 409 attached to the KMF. Key management messages, such as the record of target units, rekeying messages and instructions is passed from the KMF 403 to the KVL 401 through modem 409, telephone lines 407 and modem 405. The KVL 401 is then usable to transfer key management messages to various encryption units, as heretofore described. In a preferred embodiment, all key management messages passed between the KMF 403 and the KVL 401 are encrypted for security reasons. It will be appreciated the KVL 401 may be connected directly to the KMF 403 with a null modem if in close proximity. The null modem replaces the first modem 409, the telephone lines 407 and the second modem 405 from FIG. 4.

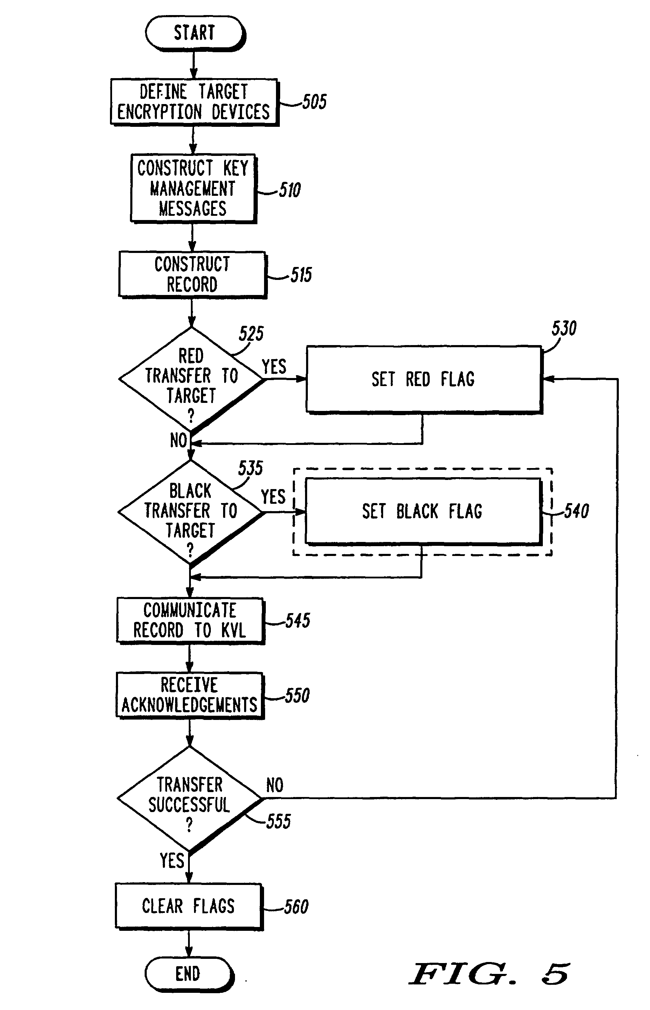

FIG. 5 is a flowchart illustrating steps of a rekeying method performable by a key management facility (KMF) of the type shown in FIG. 4 according to one embodiment of the invention. At step 505, the KMF determines one or more encryption devices that are targeted to receive key management messages, thereby defining target encryption devices. At step 510, the KMF constructs one or more key management messages for each of the target encryption devices. In one embodiment, the key management messages are encrypted at the KMF, defining encrypted ("black") key management messages. At step 515, the KMF constructs a record identifying the target encryption devices and identifying which ones of the key management messages are to be delivered to which ones of the target encryption devices.

In a preferred embodiment, the record further includes some indicia of the security level with which key management messages are to be delivered from the KVL to the target devices. At step 525, the KMF determines if any of the messages are to be delivered in red store and forward mode. If so, the KMF flags those messages that are to be delivered in red store and forward mode with some indicia of the red store and forward mode at step 530. The KMF constructs, modifies or appends the record, as the case may be, to identify those devices that are so flagged for red store and forward mode. For convenience, the indicia of a red security level will hereinafter be referred to as a "Red" flag, or a "Needs Service" flag. In one embodiment, the KMF flags a device with a Red flag or Needs Service flag, requiring red store and forward mode under the following conditions.
1. Where the KMF had previously attempted to send an encrypted message to a target device via OTAR or store-and-forward (via KVL) and the device was not able to process the message because it did not have the proper encryption key.
2. Where the KMF had previously sent a zeroize command to a target device, causing the target device to erase all of its keys. This in itself indicates to the KMF that the device will not able to process encrypted messages.
3. Where one or more target devices are new to the KMF database, the KMF either knows or presumes that those devices do not yet have the necessary keys and other secure attributes to successfully process encrypted messages.

At step 535, the KMF determines if any of the messages are to be delivered in black transfer to target mode. Generally, any messages that are not flagged for red store and forward mode will be delivered in black transfer to target mode. This may be accomplished via OTAR or via black store and forward mode. In one embodiment, the messages that are to be delivered in black transfer to target mode are not flagged. Optionally, at step 540, the KMF may set a "Black" flag for those messages that are to be delivered in black transfer to target mode, in which case the KMF constructs, modifies or appends the record, as the case may be, to identify which devices are flagged for black transfer to target mode. Optionally, the messages might also be flagged to distinguish between those messages that are to be delivered via OTAR and those that are to be delivered by black store and forward mode.

Next, at step 545, after the KMF has determined the security level for the various messages, set appropriate flags and constructs, modifies or appends the record, the KMF communicates the record to a key delivery device (e.g., by telephone line). In a preferred embodiment, the record is routed in encrypted ("black") format from the KMF to the key delivery device and the key management messages form a part of the record. Alternatively, the key management messages may be delivered separately from the record. The record and key management messages may thereafter be stored in memory of the key delivery device, as heretofore described. The key delivery device will interpret any Red flag or Needs Service flag as an instruction to deliver the associated key management message(s) in red transfer to target mode. The key delivery device will interpret any Black flag or the absence of a flag as an instruction to deliver the associated key management message(s) in black store and forward mode (except in the case where messages are flagged for OTAR delivery).

At step 550, the KMF receives detailed acknowledgements from the key delivery device and determines, based on the detailed acknowledgements, whether the message transfer(s) were successful or unsuccessful. The detailed acknowledgements include information collected by the key delivery device after attempting to deliver key management messages to one or more target encryption devices. For example, in one embodiment, the target encryption devices communicate messages to the key delivery device indicative of outcomes of success or failure of attempted delivery of the key management messages to the target devices, and the key delivery device provides detailed acknowledgements to the KMF reporting at least a portion of the respective messages collected from the target encryption devices.

For those messages that were not successfully transferred, the KMF sets a Red flag at step 530 so that the next attempt will be accomplished in red transfer to target mode. For example, in a first iteration of the process, suppose that a message intended for a particular target was attempted to be delivered (either by OTAR, or black store and forward mode) in an encrypted (black) transfer to target mode. If the attempted delivery was unsuccessful, for example, because the intended target did not have an appropriate key to decrypt the message, that will be reported to the KMF via the detailed acknowledgements. Upon notification of the unsuccessful attempt, the KMF adjusts the security level to red, sets the Red transfer flag at step 530 and modifies the record, accordingly. The modified record is communicated to the KVL at step 545. The KVL thereby will interpret the Red flag as an instruction to update the target encryption device in red store and forward mode.

For those messages that are successfully transferred, the KMF proceeds to clear any flags associated with the message at step 560, so that any further updates may be performed in encrypted "black" mode, whether by OTAR or black store and forward techniques. When all of the messages are successfully transferred and the flags cleared, the process ends until such time as the KMF commences another iteration of the process by defining new target encryption devices, constructing new key management messages, and so forth.

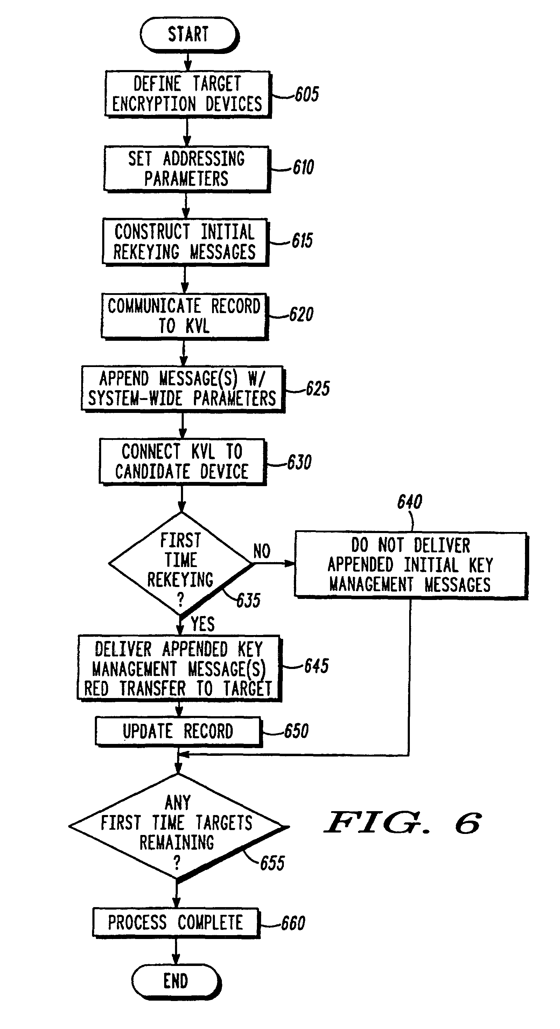

FIG. 6 is a flowchart identifying steps for initial configuration of a centralized key management system according to one embodiment of the invention. At step 605, the KMF defines one or more target encryption devices that are to receive initial key management messages (e.g., first-time rekeying messages). At step 610, the KMF sets addressing parameters for the initial key management messages. In one embodiment, the addressing parameters include a default destination ID of the encryption devices targeted to receive the initial key management messages. The default destination ID is derived in one embodiment from the respective target devices' Data System ID, presumed to be an existing, readily available ID that has been established between each encryption unit and the data system infrastructure in order to enable general data services for the unit. The Data System ID is used, for example, in ASTRO™ over-the-air-rekeying (OTAR) systems, available from Motorola.

At step 615, the KMF constructs one or more initial key management messages (e.g., initial rekeying messages) for the target encryption devices. In one embodiment, the initial key management messages include a source ID of the KMF and a destination ID equal to the default destination ID of the respective target units. In one embodiment, the initial key management messages are encrypted at the KMF, defining encrypted ("black") key management messages, and are accompanied with a Red flag or red transfer to target instruction.

At step 620, the KMF communicates a record to the KVL (e.g., by telephone line 407) with the initial key management messages. In a preferred embodiment, the record identifies the target encryption devices, the addressing parameters associated with the target devices, identifies which ones of the initial key management messages are to be delivered to which ones of the target encryption devices and also the security level to be used for the delivery. The record and key management messages may thereafter be stored in memory of the KVL. In a preferred embodiment, the KVL appends the initial key management messages with system-wide parameters at step 625, defining appended messages that may be stored in the memory of the KVL. The system-wide parameters may comprise, for example, programming messages to the encryption unit establishing the KMF's ID as the valid source ID for rekeying messages and/or establishing message number counters. The system-wide parameters in one embodiment are constructed at the KVL. Alternatively, the system-wide parameters may be constructed at the KMF and forwarded to the KVL along with the key management messages and/or record.

At step 630, the KVL is operably connected (e.g., by cable or wireless connection) to a candidate encryption device. At step 635, the KVL determines if the candidate encryption device is a target encryption device, i.e., that is to receive an initial key management message. In one embodiment, this is accomplished by the KVL first determining an identity (e.g., numeric unit ID) of the candidate device, then comparing the unit ID of the candidate device to the default unit IDs of the target devices stored in the record. The KVL determines the candidate encryption device to be a target encryption device if the unit ID of the candidate encryption device matches a default unit ID of a target encryption device identified in the record. Conversely, the KVL determines the candidate encryption device not to be a target encryption device if the unit ID of the candidate encryption device does not match a default unit ID of a target encryption device identified in the record.

If at step 635 the candidate device is determined by the KVL to be a target device, the KVL delivers the appended initial key management messages (i.e., including initial key management messages and system-wide parameters) to the unit (step 645). In one embodiment, the initial key management messages are accompanied with a red flag or transfer to target instruction causing the KVL to decrypt the messages and to deliver decrypted ("red") key management messages to the designated target. The red transfer to target instruction may comprise a direct or indirect instruction as described in relation to FIG. 2. The target device may receive one or more initial key management messages, and each message may include one or more rekeying messages. Also, the initial key management message(s) delivered to the target device may differ from the initial key management message(s) delivered, or yet to be delivered, to other target devices.

At step 650, the KVL collects information from the target devices, for example, relating to success or failure of attempted delivery of key management messages to the target devices and updates the record, for example, to reflect that the target device has been successfully or unsuccessfully rekeyed. Optionally, the KVL may forward the information collected from the target devices, or a portion thereof, to the KMF in the form of detailed acknowledgements, as described in relation to FIG. 5 (step 545).

At step 655, the KVL determines if there are any target devices remaining that are to receive initial key management messages. If there are no target devices remaining, the process is complete (step 660). Otherwise, if there are still target devices remaining, the process returns to step 630 where the KVL is connected to a next candidate device, and so forth. Optionally, if there are still target devices remaining, a message is displayed to the operator indicating how many or which ones of the target devices are remaining. In one embodiment, after the delivery of first time key management messages is complete, any future key management messages are constructed at the KMF and delivered to the KVL, as described in relation to FIG. 5, and delivered from the KVL to the target devices as described in relation to FIG. 3.

If at step 635 the candidate device is determined by the KVL not to be a device targeted to receive initial key management messages, the KVL does not deliver appended initial key management messages to the unit (step 640). For example, if a delivery of first-time rekeying messages is attempted by an operator to a candidate device determined not to be a target device, the KVL will block such attempt at step 640. Then, the process continues to step 655 where the KVL determines if there any target devices remaining, as heretofore described. to a candidate device determined not to be a target device, the KVL will block such attempt at step 640. Then, the process continues to step 655 where the KVL determines if there any target devices remaining, as heretofore described.

The present disclosure therefore has identified a key management system, usable either in an ongoing manual rekeying scheme or upon initial set-up or fault recovery of a centralized key management system, that reduces the burdens placed upon the key delivery device operator in performing rekeying activity. The system will prevent the operator from accidentally rekeying a particular encryption device that should not have been rekeyed, will prevent the operator from loading the wrong keys into a particular encryption device and will provide for automatically recording the success or failure of rekeying activity. The system will support both encrypted ("black transfer to target") and unencrypted ("red transfer to target") modes of delivering rekeying messages, provides for adjusting the security level from black transfer to target (via OTAR, or black store and forward) to red store and forward, where appropriate, to update devices that are unable to process key management messages sent in black transfer to target mode, and will support setting up a centralized key management system without manually programming source and destination ID's into the various encryption units.

## Claims

1. A key management method to be performed in a communication system including a key management facility (403), a key delivery device (101,401) and a number of encryption devices (103), the method comprising the steps of:
operably connecting (310) the key delivery device to one or more candidate encryption devices;
determining which ones of the candidate encryption devices are target encryption devices; and
delivering, from the key delivery device, one or more keys to the candidate encryption devices determined to be target encryption devices; and **characterized by** the steps of:
receiving (via 201), by the key delivery device, from the key management facility one or more key management messages including indicia of respective target encryption devices that are to receive one or more key management messages;
determining (315), by the key delivery device upon connecting to the one or more candidate encryption devices, which ones of the candidate encryption devices are target encryption devices for the key management messages; and
delivering (325), from the key delivery device, one or more of the key management messages to the candidate encryption devices determined by the key delivery device to be target encryption devices for the key management messages.

2. A method according to claim 1 and further comprising the step of displaying (by 211A), by the key delivery device upon a successful delivery of a key management message to a target encryption device, a message indicative of the successful delivery of the key management message to the target encryption device.

3. A method according to claim 1 or claim 2 and further comprising the step of displaying, by the key delivery device upon an unsuccessful delivery of a key management message to a target encryption device, a message indicative of the unsuccessful delivery of a key management message to the target encryption device.

4. A method according to any one of the preceding claims and wherein the key delivery device comprises a key variable loader (101).

5. A method according to any one of the preceding claims and wherein the step of receiving one or more key management messages comprises receiving (620) an encrypted key management message to be delivered in red transfer to target mode, the method comprising:
decrypting the encrypted key management message, yielding an unencrypted key management message including a target destination identifier; and
delivering the unencrypted key management message to a target communication device corresponding to the target destination identifier.

6. A method according to any one of the preceding claims and, wherein the step of receiving one or more key management messages comprises receiving (620) an encrypted key management message to be delivered in black transfer to target mode, the method comprising:
determining a target destination identifier associated with the encrypted key management message; and
delivering the encrypted key management message to a target communication device corresponding to the target destination identifier.

## Patentansprüche

1. Schlüsselverwaltungsverfahren, welches in einem Kommunikationssystem, umfassend eine Schlüsselverwaltungseinrichtung (403) eine Schlüsselausgabevorrichtung (101, 401) und eine Anzahl von Verschlüsselungsvorrichtungen (103) durchzuführen ist, wobei das Verfahren die Schritte umfasst:
wirksam Verbinden (310) der Schlüsselausgabevorrichtung mit einer oder mehreren Kandidaten-Verschlüsselungsvorrichtungen;
Bestimmen, welche der Kandidaten-Verschlüsselungsvorrichtungen, Ziel-Verschlüsselungsvorrichtungen sind; und
Ausgeben, von der Schlüsselausgabevorrichtung, eines oder mehrerer Schlüssel an diejenigen Kandidaten-Verschlüsselungsvorrichtungen, für welche bestimmt wurde, dass sie Ziel-Verschlüsselungsvorrichtungen sind; und durch die Schritte **gekennzeichnet** ist:
Empfangen (über 201), mittels der Schlüsselausgabevorrichtung von der Schlüsselverwaltungseinrichtung, einer oder mehrerer Schlüsselverwaltungsmitteilungen, umfassend einen Hinweis auf entsprechende Ziel-Verschlüsselungsvorrichtungen, welche eine oder mehrere Schlüsselverwaltungsmitteilungen erhalten sollen;
Bestimmen (315), mittels der Schlüsselausgabevorrichtung beim Verbinden mit einer oder mehreren Kandidaten-Verschlüsselungsvorrichtungen, welche der Kandidaten-Verschlüsselungsvorrichtungen Ziel-Verschlüsselungsvorrichtungen für die Schlüsselverwaltungsmitteilungen sind; und
Ausgeben (325), von der Schlüsselausgabevorrichtung, einer oder mehrerer der Schlüsselverwaltungsmitteilungen an die Kandidaten-Verschlüsselungsvorrichtungen, für die von der Schlüsselausgabevorrichtung bestimmt wurde, dass sie Ziel-Verschlüsselungsvorrichtungen für die Schlüsselverwaltungsmitteilungen sind.

2. Verfahren nach Anspruch 1 und weiter umfassend den Schritt des Anzeigens (mittels 211A), durch die Schlüsselausgabevorrichtung bei einer erfolgreichen Ausgabe einer Schlüsselverwaltungsmitteilung an eine Ziel-Verschlüsselungsvorrichtung, einer Mitteilung, welche auf die erfolgreiche Ausgabe der Schlüsselverwaltungsmitteilung an die Ziel-Verschlüsselungsvorrichtung hinweist.

3. Verfahren nach Anspruch 1 oder Anspruch 2 und weiter umfassend den Schritt des Anzeigens, durch die Schlüsselausgabevorrichtung bei einer erfolglosen Ausgabe einer Schlüsselverwaltungsmitteilung an eine Ziel-Verschlüsselungsvorrichtung, einer Mitteilung, welche auf die erfolglose Ausgabe einer Schlüsselverwaltungsmitteilung an die Ziel-Verschlüsselungsvorrichtung hinweist.

4. Verfahren gemäß einem der vorangehenden Ansprüche und wobei die Schlüsselausgabevorrichtung ein Schlüsselvariablen-Lader (101) umfasst.

5. Verfahren nach einem der vorangehenden Ansprüche und wobei der Schritt des Empfangens einer oder mehrerer Schlüsselverwaltungsmitteilungen ein Empfangen (620) einer verschlüsselten Schlüsselverwaltungsmitteilung, welche in einem "roten" Übertragung-zum-Ziel-Modus ausgegeben werden soll, umfasst, wobei das Verfahren umfasst:
Entschlüsseln der verschlüsselten Schlüsselverwaltungsmitteilung, was eine unverschlüsselte Schlüsselverwaltungsmitteilung ergibt, welche einen Zielbestimmungsidentifikator enthält; und
Ausgeben der unverschlüsselten Schlüsselverwaltungsmitteilung an eine Zielkommunikationsvorrichtung, welche dem Zielbestimmungsidentifikator entspricht.

6. Verfahren nach einem der vorangehenden Ansprüche und wobei der Schritt des Empfangens einer oder mehrerer Schlüsselverwaltungsmitteilungen ein Empfangen (620) einer verschlüsselten Schlüsselverwaltungsmitteilung, die in einen "schwarzen" Übertragung-zum-Ziel-Modus ausgegeben werden soll, umfasst, wobei das Verfahren umfasst:
Bestimmen eines der verschlüsselten Schlüsselverwaltungsmitteilung zugeordneten Zielbestimmungsidentifikators; und
Ausgeben der verschlüsselten Schlüsselverwaltungsmitteilung an eine Zielkommunikationsvorrichtung, welche dem Zielbestimmungsidentifikator entspricht.

## Revendications

1. Procédé de gestion de clé à réaliser dans un système de communication comprenant une installation de gestion de clé (403), un dispositif de fourniture de clé (101, 401) et un nombre de dispositifs de cryptage (103), le procédé comprenant les étapes de :
raccordement fonctionnellement (310) du dispositif de fourniture de clé à un ou plusieurs dispositifs de cryptage candidats ;
détermination desquels des dispositifs de cryptage candidats sont des dispositifs de cryptage cibles ; et
fourniture par le dispositif de fourniture de clé d'une ou de plusieurs clés aux dispositifs de cryptage candidats déterminés être des dispositifs de cryptage cibles ; et **caractérisé par** les étapes de :
réception (via 201), par le dispositif de fourniture de clé, à partir de l'installation de gestion de clé d'un ou de plusieurs messages de gestion de clé comprenant des indices de dispositifs de cryptage respectifs qui sont destinés à recevoir un ou plusieurs messages de gestion de clé ;
détermination (315), par le dispositif de fourniture de clé lors de la connexion à un ou plusieurs des dispositif de cryptage candidats, desquels des dispositifs de cryptage candidats sont des dispositifs de cryptage cibles pour les messages de gestion de clé ; et
fourniture (325), par le dispositif de fourniture de clé, d'un ou de plusieurs des messages de gestion de clé aux dispositifs de cryptage candidats déterminés par le dispositif de fourniture de clé être des dispositifs de cryptage cibles pour les messages de gestion de clé.

2. Procédé selon la revendication 1 et comprenant en outre l'étape d'affichage (par l'affichage 211A), par le dispositif de fourniture de clé lors d'une fourniture réussie d'un message de gestion de clé à un dispositif de cryptage cible, d'un message indicateur de la fourniture réussie du message de gestion de clé au dispositif de cryptage cible.

3. Procédé selon la revendication 1 ou la revendication 2, et comprenant en outre l'étape d'affichage, par le dispositif de fourniture de clé lors d'une fourniture échouée d'un message de gestion de clé sur un dispositif de cryptage cible, d'un message indicateur de la fourniture échouée d'un message de gestion de clé sur le dispositif de cryptage cible.

4. Procédé selon l'une quelconque des revendications précédentes et dans lequel le dispositif de fourniture de clé comprend un chargeur de clé variable (101).

5. Procédé selon l'une quelconque des revendications précédentes et dans lequel l'étape de réception d'un ou de plusieurs messages de gestion de clé comprend la réception (620) d'un message crypté de gestion de clé à fournir en mode de transfert rouge à la cible, le procédé comprenant :
le décryptage du message crypté de gestion de clé, donnant un message non-crypté de gestion de clé comprenant un identifieur de destination cible ; et
la fourniture du message non-crypté de gestion de clé à un dispositif de communication cible correspondant à l'identifieur de destination cible.

6. Procédé selon l'une quelconque des revendications précédentes, et dans lequel l'étape de réception d'un ou de plusieurs messages de gestion de clé comprend la réception (620) d'un message crypté de gestion de clé à fournir en mode de transfert noir à la cible, le procédé comprenant :
la détermination d'un identifieur de destination cible associé au message crypté de gestion de clé ; et
la fourniture du message crypté de gestion de clé à un dispositif de communication cible correspondant à l'identifieur de destination cible.
